# EUROPÄISCHE PATENTSCHRIFT

(11) **EP 0 532 820 B1**
(45) Veröffentlichungstag und Bekanntmachung des Hinweises auf die Patenterteilung: **21.06.1995**
(21) Anmeldenummer: 91890213.1
(22) Anmeldetag: 17.09.1991
(51) Int. Cl.: B23D 36/00, B26D 5/08

(54) **Rotations- oder Lenkhebelschere**
Rotational or lever shear
Cisaille à tambour ou à levier

(43) Veröffentlichungstag der Anmeldung: 24.03.1993
(73) Patentinhaber: GFM Gesellschaft für Fertigungstechnik und Maschinenbau Aktiengesellschaft, A-4403 Steyr (AT)
(72) Erfinder: Hein, Otto, A-4400 Steyr (AT)
(74) Vertreter: Hübscher, Heiner, Dipl.-Ing.

(56) Entgegenhaltungen:
- DE-C- 853 543
- GB-A- 576 583
- GB-A- 736 599

## Beschreibung

Die Erfindung bezieht sich auf eine Rotations- oder Lenkhebelschere, insbesondere für kontinuierliche Walzstraßen, mit zwei zusammenwirkenden, messerbestückten Messerköpfen, deren gemeinsamer Drehantrieb über eine Schaltkupplung und ein Getriebe von einer einen Antriebsmotor und ein Schwungrad umfassenden Antriebseinheit ableitbar ist, wobei die über die Schaltkupplung an die Antriebseinheit ankuppelbaren Scherenteile eine Abtriebseinheit bilden, der ein Zusatzantrieb zugeordnet ist.

Rotations- oder Lenkhebelscheren dienen zum Durchtrennen von Stangenmaterial, Blöcken, Brammen, Knüppeln u.dgl. und schneiden das Material mit ihren paarweise zusammenwirkenden Messerköpfen während dessen Durchlauf durch die Messerkopfpaare. Sie werden daher auch meist in Walzstraßen integriert und als Schopf- oder Teilscheren eingesetzt, wobei Walzgut unterschiedlichen Querschnittes und unterschiedlicher Durchlaufgeschwindigkeit geschnitten werden muß. Da die Scherenmesser der Messerköpfe beim Schneiden eine etwa der Durchlaufgeschwindigkeit des Walzgutes entsprechende Umfangsgeschwindigkeit erreichen müssen, um den Materialdurchlauf möglichst wenig zu beeinträchtigen und einen einwandfreien Schnittvorgang ohne eine übermäßige Stauch- oder Dehnwirkung für das Material durchführen zu können, werden an die Scherenantriebe hohe Anforderungen hinsichtlich der Beschleunigungsfähigkeit der Messerköpfe gestellt, wozu noch ein Leistungsvermögen kommt, das für eine auf den maximalen Querschnitt eines zu durchtrennenden Materials abgestimmte Schnittarbeit auszulegen ist, was durch den Einsatz entsprechender Schwungräder erfolgt.

Bisher sind zwei Antriebssysteme für Rotations- oder Lenkhebelscheren bekannt und demgemäß gibt es eine sogenannte Kupplungsschere und eine sogenannte Motorschere. Bei der Kupplungsschere wird die aus Antriebsmotor und Schwungrad bestehende Antriebseinheit über eine Schaltkupplung von den übrigen Scherenteilen, also dem Getriebe und den Messerköpfen u.dgl., getrennt und läuft mit der auf die Durchlaufgeschwindigkeit des zu schneidenden Materials abgestimmten Drehzahl ständig um. Soll nun ein Schnitt durchgeführt werden, wird die Kupplung eingerückt, so daß nach einer Rutschphase während des Einkuppelns die Messerköpfe zum Zeitpunkt des eigentlichen Schnittes die erforderliche Umfangsgeschwindigkeit aufweisen. Nach dem Schnitt wird die Kupplung ausgeschaltet und die abgekuppelten Scherenteile mit einer eigenen Bremse abgebremst. Dieser Vorgang wiederholt sich bei jedem Schnitt. Der Schwachpunkt dieses Antriebssystems liegt in der Schaltkupplung, die aufgrund der beim Beschleunigen zu übertragenden Momente und der damit zusammenhängenden Reibarbeit extremen Verschleißbedingungen und Wärmebelastungen unterworfen ist, so daß es zu einer hohen Störanfälligkeit kommt und eine intensive Wartung mit häufigen Stillstandszeiten erforderlich ist, was beim Einsatz einer solchen Schere in einer Walzstraße auch die Walzanlage lahmlegt. Abgesehen davon ist ein entsprechender Aufwand für die Kühl- und Bremseinrichtungen u.dgl. in Kauf zu nehmen und, da sich durch die Wärmebelastungen und die Abnützungserscheinungen die Kupplungsverhältnisse laufend ändern, ist die Zeitspanne zwischen dem Einschalten der Kupplung und dem eigentlichen Schnittbeginn nicht exakt vorhersehbar, so daß eine genaue Schnittfolge nicht gewährleistet werden kann. Außerdem wird der Einsatzbereich dieser Scheren durch die zur Verfügung stehende kurze Beschleunigungszeit, die ja nur etwa einer halben Umdrehung eines Messerkopfes entspricht, hinsichtlich der Durchlaufgeschwindigkeiten des Schnittmaterials beschränkt.

Das andere Antriebssystem, das bei der sogenannten Motorschere Verwendung findet, umfaßt eine bleibend mit dem Getriebe und den Messerköpfen gekoppelte Antriebseinheit, so daß für jeden Schnittvorgang der Motor nicht nur seine eigenen rotierenden Teile und die anderen drehenden Scherenteile, sondern vor allem auch das Schwungrad bis zur erforderlichen Geschwindigkeit beschleunigen muß, was enorme Motormomente voraussetzt. Auch hier ist der Einsatzbereich durch die Motordimensionierung beschränkt und es wird, um den Einsatzbereich auf höhere Durchlaufgeschwindigkeiten zu erweitern, vorgeschlagen, das Schwungrad gegebenenfalls abzukoppeln und nur über den Motor die Schnittarbeit zu leisten.

Bei beiden Antriebssystemen ist außerdem die mögliche Schnittfolge wegen der durch die Antriebseinheit vorgegebenen, an die Durchlaufgeschwindigkeit des zu schneidenden Materials angepaßten Grunddrehzahl allein vom Messerkopfradius abhängig, wodurch sich bei einem Durchdrehen der Messerköpfe eine nicht erhöhbare Schnittfolge ergibt. Diese Schnittfolge ist aber häufig für einen sogenannten Häckselvorgang, bei dem das Schneidmaterial in möglichst kleine Stücke geschnitten werden soll, ungenügend und die enstehenden Stücke zur Weiterverarbeitung, beispielsweise als Schrott nach einer Störung in der Walzstraße, zu groß, so daß dann ein eigener zusätzlicher Zerkleinerungsschritt an den Häckselvorgang anschließen muß.

Aus der GB-A-736 599 ist weiters eine Rotationsschere bekannt, die für ihre Scherenteile neben der Antriebseinheit noch einen Zusatzantrieb zum Rückdrehen der Messerköpfe in eine vorbestimmte Ausgangsposition aufweist. Dieser Zusatzantrieb ist allerdings ein reiner Stelltrieb, der für den eigentlichen Scherenantrieb nicht genutzt werden kann und somit auch die Antriebsverhältnisse als solche nicht beeinflußt.

Der Erfindung liegt daher die Aufgabe zugrunde, diese Mängel zu beseitigen und eine Rotationsschere der eingangs geschilderten Art zu schaffen, die sich durch ihren rationellen Antrieb, ihre genaue Arbeitsweise sowie ihre Betriebssicherheit und Wartungsarmut auszeichnet.

Die Erfindung löst diese Aufgabe dadurch, daß die Abtriebseinheit vor einem Ankuppeln an die Antriebseinheit durch den Zusatzantrieb zumindest auf eine der Kupplungsdrehzahl der Antriebseinheit entsprechende Kupplungsdrehzahl beschleunigbar ist. Mit Hilfe dieses Zusatzantriebes kann die Abtriebseinheit für einen Schnittvorgang auf die erforderliche Geschwindigkeit beschleunigt werden, bevor es zum Einrücken der Schaltkupplung kommt, so daß einerseits die Schaltkupplung ohne Rutschverluste und damit ohne Verschleiß arbeitet und anderseits für die Schnittarbeit die Leistung der Antriebseinheit voll genutzt werden kann. Die Antriebseinheit läuft ständig mit der auf die Durchlaufgeschwindigkeit des zu schneidenden Materials abgestimmten Drehzahl um, was mit wenig Energieverbrauch verbunden ist, und die Abtriebseinheit kann wegen ihrer geringeren Massen ebenfalls aufwandsarm durch den Zusatzantrieb im erforderlichen Maß beschleunigt werden, so daß in kürzerster Zeit die gewünschten Geschwindigkeiten erreicht werden und sich ein weiter Anwendungsbereich für diese Scheren eröffnet. Dazu kommt noch, daß durch die fehlenden Relativgeschwindigkeiten im Bereich der Schaltkupplung stets gleichbleibende Kupplungsverhältnisse auftreten, die den Schnittzeitpunkt exakt vorzubestimmen erlauben und darüber hinaus zur angestrebten Betriebssicherheit und Wartungsarmut führen. Der Zusatzantrieb übernimmt außerdem zusätzlich zur Beschleunigung der Scherenteile nach dem Schnittvorgang auch deren Abremsung und Positionierung, wodurch eigene Bremseinrichtungen unnötig sind und durch die Bremsarbeit bei geeigneten Antriebseinrichtungen eine Energierückspeisung in das Netz möglich ist, was eine besonders wirtschaftliche Energiebilanz mit sich bringt.

Ist die Abtriebseinheit über den Zusatzantrieb vor dem Ankuppeln zuerst auf eine gegenüber der Kupplungsdrehzahl der Antriebseinheit erhöhte Kupplungsdrehzahl beschleunigbar und dann zum Ankuppeln auf diese Kupplungsdrehzahl der Antriebseinheit abbremsbar, läßt sich bei einem fortlaufenden Scherenbetrieb für einen Häckselvorgang die Umlaufzeit der Messerköpfe entsprechend verkürzen und damit die Schnittfolge gegenüber herkömmlichen Antrieben beträchtlich beschleunigen, so daß beim Häckseln ausreichend kurze Materialstücke entstehen.

Nach einer vorteilhaften Ausgestaltung der Erfindung weist der Zusatzantrieb für die Abtriebseinheit einen eigenen Antriebsmotor auf, der vorzugsweise an eine der Getriebewellen des Scherengetriebes ankoppelbar ist. Es gibt daher zwei Motoren, einen für die Antriebseinheit und einen für die Abtriebseinheit, so daß jeder Motor für die ihm zugeordnente Aufgabe speziell ausgelegt werden kann und ein energiesparender, rationeller Betrieb gewährleistet ist.

Gemäß einer anderen Ausgestaltung der Erfindung kann der Zusatzantrieb für die Abtriebseinheit auch vom Antriebsmotor der Antriebseinheit ableitbar sein, wozu der Antriebsmotor über Hilfskupplungen wahlweise der Antriebseinheit oder der Abtriebseinheit zuschaltbar ist. Hier wird mit einem Motor das Auslangen gefunden, der bedarfsweise der Antriebs- oder Abtriebseinheit zugeordnet wird, was allerdings entsprechende Hilfskupplungen erfordert.

In der Zeichnung ist der Erfindungsgegenstand beispielsweise veranschaulicht, und zwar zeigen
- Fig. 1: die Arbeitsweise einer Rotationsschere in einer prinzipiellen Seitenansicht und die
- Fig. 2 und 3: zwei Ausführungsbeispiele einer erfindungsgemäßen Rotations- oder Lenkhebel jeweils in einem Anlagenschema.

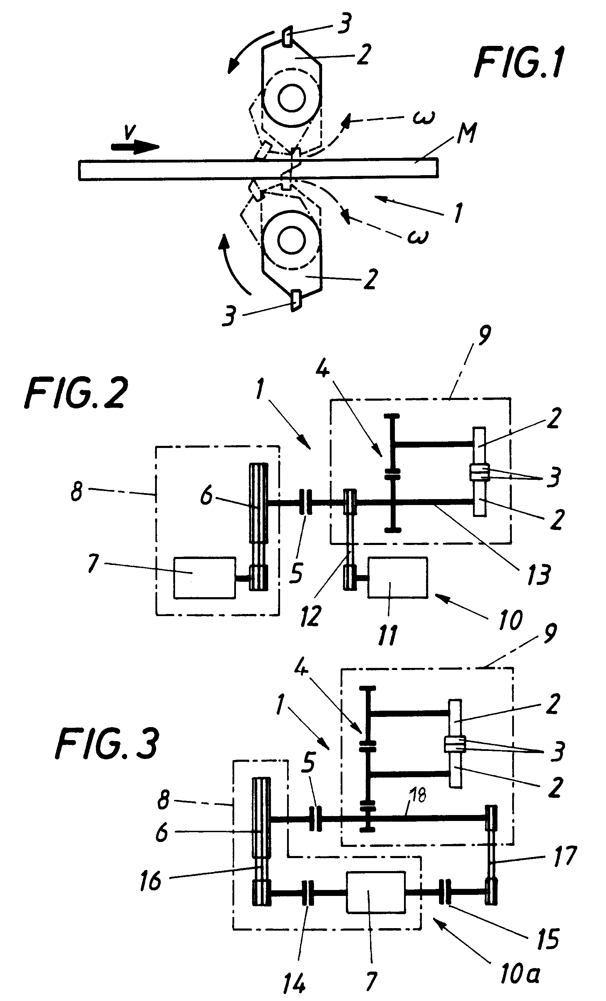

Wie in Fig. 1 angedeutet, weist eine Rotationsschere 1 zwei zusammenwirkende Messerköpfe 2 auf, die jeweils mit einem Scherenmesser 3 bestückt sind und zum Schneiden von einer bestimmten Ausgangsposition (Darstellung mit durchgezogenen Linien) gegengleich drehend beschleunigt werden, bis sie beim Aufsetzen auf das mit einer vorgegebenen Durchlaufgeschwindigkeit v zwischen den Messerköpfen 2 hindurchlaufende Schnittmaterial M eine dieser Durchlaufgeschwindigkeit etwa gleiche, vorzugsweise eine etwas höhere Umfangsgeschwindigkeit ω (strichpunktierte Darstellung) aufweisen, und dann während des Durchdrehens durch den Schneidbereich (strichlierte Darstellung) das Schnittmaterial durchtrennen. Nach dem Schnittvorgang werden die Messerköpfe 2 abgebremst und wieder in die Ausgangsposition gebracht.

Gemäß den Ausführungsbeispielen nach Fig. 2 und 3 gibt es für die beiden Messerköpfe 2 einen gemeinsamen Drehantrieb, der über ein Getriebe 4 und eine Schaltkupplung 5 von einer ein Schwungrad 6 und einen Antriebsmotor 7 umfassenden Antriebseinheit 8 ableitbar ist. Die über die Schaltkupplung 5 an diese Antriebseinheit 8 ankuppelbaren Scherenteile bilden ihrerseits eine Abtriebseinheit 9, der ein Zusatzantrieb 10, 10a zugeordnet ist.

Wie in Fig. 2 veranschaulicht, weist der Zusatzantrieb 10 einen eigenen Antriebsmotor 11 auf, der beispielsweise über einen Riementrieb 12 oder eine Wellenkupplung od.dgl. an eine Getriebewelle 13 des Getriebes 4 angekuppelt ist. Bei Betrieb der Schere läuft die Antriebseinheit 8 ständig mit einer an die Durchlaufgeschwindigkeit v des Schnittmaterials M angepaßten Drehzahl um, wobei die Schaltkupplung 5 geöffnet ist und der Antriebsmotor 7 lediglich für die Aufrechterhaltung der Schwungraddrehzahl zu sorgen hat. Die abgekuppelte Abtriebseinheit 9 ist in Ausgangsstellung, die Messerköpfe 2 befinden sich in Ausgangposition. Soll nun ein Scherenschnitt erfolgen, wird der Zusatzantrieb 10 aktiviert und der Antriebsmotor 11 beschleunigt über den Riementrieb 12 das Getriebe 4 und damit die Messerköpfe 2, die gegengleich mit wachsender Geschwindigkeit zu drehen beginnen und vor dem Aufsetzen der Scherenmesser auf dem Schnittgut eine entsprechende Umfangsgeschwindigkeit erreichen. In diesem Augenblick wird die Schaltkupplung 5 eingerückt, was praktisch ohne Verlustarbeit geschieht, da An- und Abtriebseinheiten 8, 9 im Kupplungsbereich die gleiche Drehzahl besitzen, und die Antriebseinheit 8 an die Abtriebseinheit 9 angeschlosssen, so daß während des Aufsetzens und Eindringens der Scherenmesser in das Schnittmaterial die volle Antriebsleistung der Antriebseinheit 8 für die eigentliche Schnittarbeit zur Verfügung steht. Sobald das Material durchschnitten ist, wird die Abtriebseinheit 9 von der Antriebseinheit 8 abgekuppelt und der Antriebsmotor 11 der Abtriebseinheit 9 bremst die Abtriebseinheit in ihre Grundstellung ein, in der die Messerköpfe 2 wieder in Ausgangsposition stehen. Die Schere 1 ist für den nächsten Schnittvorgang bereit.

Wie in Fig. 3 veranschaulicht, kann der Zusatzantrieb 10a auch vom Antriebsmotor 7 der Antriebseinheit 8 abgeleitet werden, wozu dieser Antriebsmotor 7 über Hilfskupplungen 14, 15 wahlweise an einen Riementrieb 16 zum Antrieb des Schwungrades 6 oder an einen Riementrieb 17 zum Antrieb einer Getriebewelle 18 des Getriebes 4 ankuppelbar ist.

Bei Scherenbetrieb bringt vorerst der Antriebsmotor 7 bei eingerückter Hilfskupplung 14 und ausgerückter Schaltkupplung 5 das Schwungrad 6 auf die der Durchlaufgeschwindigkeit des Schnittmaterials angepaßte Drehzahl und sorgt für die Konstanthaltung dieser Drehzahl. Die Hilfskupplung 15 ist ausgerückt, die Abtriebseinheit 9 befindet sich in Grundstellung, in der die Messerköpfe 2 in ihrer Ausgangsposition liegen. Zur Durchführung eines Schnittes wird die Hilfskupplung 14 gelöst und die Hilfskupplung 15 eingerückt, so daß über den Antriebsmotor 7 nun die Abtriebseinheit 9 beschleunigt werden kann, worauf zum eigentlichen Schnittvorgang die Schaltkupplung 5 eingerückt und die Antriebseinheit 8 an die Abtriebseinheit 9 angeschlossen wird, wodurch wiederum die volle Antriebsleistung für die Schnittarbeit zur Verfügung steht. Nach dem Schnitt kuppelt die Schaltkupplung 5 aus, der Antriebsmotor 7 bremst die Abtriebseinheit 9 im erforderlichen Maß ab und sorgt für das Einnehmen der Ausgangsposition durch die Messerköpfe 2. Sobald diese Grundstellung erreicht ist, wird die Hilfskupplung 15 ausgerückt und die Hilfskupplung 14 eingerückt, so daß das Schwungrad 6 zur Aufhebung des beim Schneiden aufgetretenen Drehzahleinbruches wieder auf die erforderliche Drehzahl beschleunigt werden kann und die Schere für den nächsten Schnitt bereit ist.

Auf Grund des Zusatzantriebes 10, 10a für die Abtriebseinheit 9 wird ein sehr wirtschaftlicher Scherenantrieb gewährleistet, wobei es trotz der hohen Antriebsleistungen zu einer weitgehenden Verschleißfestigkeit und Betriebssicherheit kommt. Darüber hinaus ist es durch den Zusatzantrieb 10, 10a möglich, während eines durchgehenden Betriebes für einen Häckselvorgang die Umfangsgeschwindigkeit der Messerköpfe 2 zwischen den einzelnen Schnitten, also während der Zeitspanne, in der die An- und Abtriebseinheit 8, 9 durch die Schaltkupplung 5 voneinander getrennt sind, zu erhöhen und damit die Schnittfolge zu beschleunigen und die Schnittlängen zu verkürzen.

## Patentansprüche

1. Rotations- oder Lenkhebelschere (1), insbesondere für kontinuierliche Walzstraßen, mit zwei zusammenwirkenden, messerbestückten Messerköpfen (2), deren gemeinsamer Drehantrieb über eine Schaltkupplung (5) und ein Getriebe (4) von einer einen Antriebsmotor (7) und ein Schwungrad (6) umfassenden Antriebseinheit (8) ableitbar ist, wobei die über die Schaltkupplung (5) an die Antriebseinheit (8) ankuppelbaren Scherenteile eine Abtriebseinheit (9) bilden, der ein Zusatzantrieb (10; 10a) zugeordnet ist, dadurch gekennzeichnet, daß die Abtriebseinheit (9) vor einem Ankuppeln an die Antriebseinheit (8) durch den Zusatzantrieb (10; 10a) zumindest auf eine der Kupplungsdrehzahl der Antriebseinheit (8) entsprechende Kupplungsdrehzahl beschleunigbar ist.

2. Schere nach Anspruch 1, dadurch gekennzeichnet, daß die Abtriebseinheit (9) über den Zusatzantrieb (10; 10a) vor dem Ankupplen zuerst auf eine gegenüber der Kupplungsdrehzahl der Antriebseinheit (8) erhöhte Kupplungsdrehzahl beschleunigbar und dann zum Ankuppeln auf diese Kupplungsdrehzahl der Antriebseinheit abbremsbar ist.

3. Schere nach Anspruch 1 oder 2, dadurch gekennzeichnet, daß der Zusatzantrieb (10) für die Abtriebseinheit (9) einen eigenen Antriebsmotor (11) aufweist, der vorzugsweise an eine der Getriebewellen (13) des Scherengetriebes (4) ankuppelbar ist.

4. Schere nach Anspruch 1 oder 2, dadurch gekennzeichnet, daß der Zusatzantrieb (10a) für die Abtriebseinheit (9) vom Antriebsmotor (7) der Antriebseinheit (8) ableitbar ist, wozu der Antriebsmotor (7) über Hilfskupplungen (14, 15) wahlweise der Antriebseinheit (8) oder der Abtriebseinheit (9) zuschaltbar ist.

## Claims

1. Rotary or articulated lever shears (1), more particularly for continuous rolling mills, comprising two co-operating cutter heads (2) equipped with blades, the common rotary drive for the cutter heads being derived, via a clutch (5) and a transmission (4), from a drive unit (8) comprising a drive motor (7) and a flywheel (6), those parts of the shears which can be coupled to the drive unit (8) via the clutch (5) forming a driven unit (9), with which a supplementary drive (10; 10a) is associated, characterised in that before being coupled to the drive unit (8) the driven unit (9) is adapted to be accelerated by the supplementary drive (10; 10a) at least to a coupling speed corresponding to the coupling speed of the drive unit (8).

2. Shears according to claim 1, characterised in that before the coupling operation the driven unit (9) is first adapted to be accelerated by the supplementary drive (10; 10a) to a coupling speed higher than the coupling speed of the drive unit (8) and is then adapted to be braked to said drive unit coupling speed for coupling purposes.

3. Shears according to claim 1 or 2, characterised in that the supplementary drive (10) has its own drive motor (11) for the driven unit (9), motor (11) preferably being adapted to be coupled to one of the transmission shafts (13) of the shears transmission (4).

4. Shears according to claim 1 or 2, characterised in that the supplementary drive (10a) for the driven unit (9) is adapted to be derived from the drive motor (7) of the drive unit (8), for which purpose the drive motor (7) can be coupled optionally to the drive unit (8) or the driven unit (9) via auxiliary clutches (14, 15).

## Revendications

1. Cisaille rotative ou à leviers articulés (1) en particulier pour des trains de laminoirs continus, comportant deux têtes porte-lames (2) coopérant, équipées de lames, dont l'entraînement en rotation commun peut être dérivé par l'intermédiaire d'un embrayage (5) et une transmission (4), depuis une unité d'entraînement (8) comprenant un moteur d' entraînement (7) et un volant d' inertie (6), les parties de cisaille pouvant être couplées à l'unité d'entraînement (8), par l'intermédiaire de l'embrayage (5), constituant une unité entraînée (9), à laquelle est associée un entraînement additionnel (10; 10a),
caractérisé par le fait que l'unité entraînée (9) peut être accélérée, peu avant l'accouplement à l'unité d'entraînement (8), au moyen de l'entraînement additionnel (10; 10a), au moins à une vitesse de rotation d'accouplement correspondant à la vitesse d'accouplement de l'unité d'entraînement (8).

2. Cisaille selon la revendication 1,
caractérisée par le fait que l'unité entraînée (9) peut être d'abord accélérée, par l'intermédiaire de l'entraînement additionnel (10; 10a), avant l'accouplement, pour atteindre une vitesse d'accouplement augmentée par rapport à la vitesse d'accouplement de l'unité d'entraînement (8), et peut ensuite être freinée, pour assurer l'accouplement, en atteignant cette vitesse d'accouplement de l'unité d'entraînement.

3. Cisaille selon la revendication 1 ou 2,
caractérisée par le fait que l'entraînement additionnel (10) présente pour l'unité entraînée (9) un moteur d'entraînement (11) propre pouvant être couplé de préférence à l'un des arbres de transmission (13) de la transmission de cisaille (4).

4. Cisaille selon la revendication 1 ou 2,
caractérisée par le fait que l'entraînement additionnel (10a) destiné à l'unité entraînée (9) peut être dérivé du moteur d'entraînement (7) de l'unité d'entraînement (8), ce pourquoi le moteur d'entraînement (7) peut être relié par des accouplements auxiliaires (14, 15), au choix, à l'unité d'entraînement (8) ou à l'unité entraînée (9).
